# EUROPEAN PATENT APPLICATION

(11) **EP 2 301 833 A1**
(43) Date of publication of application: **30.03.2011**
(21) Application number: 09761278.2
(22) Date of filing: 08.06.2009
(51) Int. Cl.: B62K 13/00, B62K 5/00

(54) **TWIN-FRAME BICYCLE**

(30) Priority: 10.06.2008 WO PCT/CN2008/071250; 24.03.2009 WO PCT/CN2009/070989
(71) Applicant: Chin, Hsu-Sheng, Kaohsiung City (TW); Fan Chiang, Tsung-Lin, Kaohsiung City (TW); Chin, Chih-Ching, Kaohsiung City (TW)
(72) Inventor: Chin, Hsu-Sheng, Kaohsiung City (TW); Fan Chiang, Tsung-Lin, Kaohsiung City (TW); Chin, Chih-Ching, Kaohsiung City (TW)
(74) Representative: 2K Patentanwälte Blasberg Kewitz & Reichel
(86) International application number: PCT/CN2009/072181
(87) International publication number: WO 2009/149653

(57) **Abstract**

The present invention relates to a twin-frame bicycle, particularly to one that can be pedaled by two riders in side-by-side coordination so that the riders and the twin-frame bicycle will incline integrally without tumbling or overturning. At least one articulation mechanism is disposed between a primary bicycle body and an auxiliary bicycle body, wherein the articulation mechanism serves in synergy an articulation parallelogram and a resilient tension mechanism counteracts the deformation of the articulation mechanism to maintain equilibrium. A front wheel and a rear wheel of the primary bicycle body and an auxiliary wheel of the auxiliary bicycle body form a triangular area, and the riders' center of gravity of the twin-frame bicycle is within the triangular area, which keeps the riders and the twin-frame bicycle stable without any possibility of tumbling.

## Description

### BACKGROUND OF THE INVENTION

### 1. Field of the Invention

The present invention relates to a bicycle, particularly to a twin-frame bicycle.

### 2. Description of the Related Art

Bicycle is a very popular human-powered transportation means. A bicycle is unstable when standing still and must rely on the rider to maintain equilibrium. Upon driving turns, inertia makes the bicycle body keep forwarding along the original direction. If the center of gravity is too high, bicycle speed is too fast or the bicycle turns urgently, even friction force is enough to offer the necessary centripetal force, the centrifugal moment may cause the bicycle body to rotate and overturn.

When a bicycle turns, by inclination of the driver's body and the bicycle body, the reversed moment can be created to reduce the centrifugal moment which may cause the bicycle to overturn outwards. Because of this, bicycle is naturally more stable in motion than tricycle or four-wheeled vehicle. Currently, one kind of dual-riding bicycle of tandem type already exists in the market. The two driver saddles of a tandem bicycle are arranged one after the other instead of side by side. Just like the conventional bicycle, the tandem bicycle must rely on the rider to maintain equilibrium when standing still. Another kind of dual-riding bicycle, of parallel type, also exists. However, the structure of a parallel dual-riding bicycle links two independent bicycles by a fixing rod, which results in awkward action at high speed or when turning. At high speed, sharp turn or bumpy road may cause the parallel dual-riding bicycle to overturn. Thus, it is only good for children learning to walk.

Consequently, there is a need for a twin-frame bicycle to solve the above-mentioned problems.

### SUMMARY OF THE INVENTION

The present invention is directed to a twin-frame bicycle, which includes a primary bicycle body, an auxiliary bicycle body and at least one articulation mechanism. The primary bicycle body has a primary bicycle frame, a front wheel, a rear wheel and a pedal mechanism. The front wheel and the rear wheel are connected pivotally to the primary bicycle frame and distanced from each other. The pedal mechanism is used to drive the front wheel or the rear wheel. The auxiliary bicycle body has an auxiliary bicycle frame and an auxiliary wheel. The auxiliary wheel is connected pivotally to the auxiliary bicycle frame. The articulation mechanism has a first end, a second end and at least two linking rods. The first end and the second end are connected to the primary bicycle frame and the auxiliary bicycle frame, respectively. The linking rods are substantially disposed in parallel between the first end and the second end. The first end, the second end and the linking rods form a movable quadrangle.

The twin-frame bicycle can be pedaled by two riders riding side by side or pedaled individually. Besides providing fun riding, the articulation mechanism linking the primary bicycle body and the auxiliary bicycle body makes the twin-frame bicycle stable and unlikely to tumble or overturn. In addition, since the structure of the auxiliary bicycle body is simple, the cost is saved and the maintenance of the twin-frame bicycle is easy. The structure of the articulation mechanism can be further simplified, thus saving more production cost.

### BRIEF DESCRIPTION OF THE DRAWINGS

FIG. 1 is a perspective schematic view of a twin-frame bicycle of the present invention;
FIG. 2 is the right lateral view of FIG. 1;
FIG. 3 is the top view of FIG. 1;
FIG. 4 is an operational view showing the twin-frame bicycle of the present invention during right turn;
FIG. 5 is an operational view showing the twin-frame bicycle of the present invention passing over a bumpy road;
FIG. 6 is a cross sectional view showing a wheel structure of an auxiliary bicycle body of the present invention;
FIG. 7 is a schematic view of an articulation mechanism of the present invention;
FIG. 8 is a front view of the articulation mechanism of the present invention;
FIG. 9 is the cross sectional view taken along line A-A in FIG. 8;
FIG. 10 is a schematic view of elastic elements connected to sidewalls between two linking rods of the present invention;
FIG. 11 is the cross sectional view taken along line B-B in FIG. 10;
FIG. 12 is a schematic view of elastic elements connected to positioning holes of each holding base of the articulation mechanism according to the present invention;
FIG. 13 is a schematic view of elastic elements connected to sidewalls between two linking rods and connected to positioning holes of each holding base of the articulation mechanism according to the present invention;
FIG. 14 is a schematic view of another type of articulation mechanism of the present invention;
FIG. 15 is the right lateral view of FIG. 14;
FIG. 16 is an operational view showing the articulation mechanism of the present invention during right turn;
FIG. 17 is a perspective schematic view of another embodiment of a twin-frame bicycle of the present invention;
FIG. 18 is the right lateral view of FIG. 17;
FIG. 19 is the top lateral view of FIG. 17;
FIG. 20 is a cross sectional view showing a wheel structure of an auxiliary bicycle body according to FIG. 17 of the present invention;
FIG. 21 is a schematic view of another embodiment of an auxiliary bicycle body of the present invention;
FIG. 22 is a schematic view of a further embodiment of a twin-frame bicycle of the present invention;
FIG. 23 is a schematic view of a gear assembly disposed at a rear folk of the auxiliary bicycle body according to FIG. 22 of the present invention; and
FIG. 24 is a perspective schematic view of a twin-frame bicycle which has two articulation mechanisms of the present invention.

### DETAILED DESCRIPTION OF THE INVENTION

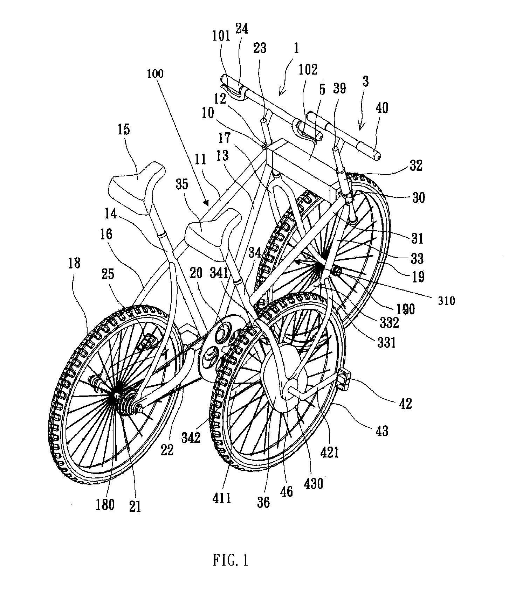

As shown in FIGs. 1 to 3, a twin-frame bicycle includes a primary bicycle body 1, an auxiliary bicycle body 3 and an articulation mechanism 5. A saddle 15 of the primary bicycle body 1 and a saddle 35 of the auxiliary bicycle body 3 are arranged in side-by-side juxtaposition instead of one behind the other.

In this embodiment, the primary bicycle body 1 has a primary bicycle frame 100, a front wheel 19, a rear wheel 18 and a pedal mechanism. The front wheel 19 and the rear wheel 18 are connected pivotally to the primary bicycle frame 100 and distanced from each other. The pedal mechanism is used to drive the front wheel 19 or the rear wheel 18. The auxiliary bicycle body 3 has an auxiliary bicycle frame 610 and an auxiliary wheel 43. The auxiliary wheel 43 is connected pivotally to the auxiliary bicycle frame 310. The articulation mechanism 5 has a first end 50, a second end 59 and at least two linking rods 53, 54. The first end 50 and the second end 59 are connected to the primary bicycle frame 100 and the auxiliary bicycle frame 310, respectively. The linking rods 53, 54 are substantially disposed in parallel between the first end 50 and the second end 59. The first end 50, the second end 59 and the linking rods 53, 54 form a movable quadrangle.

The primary bicycle body 1 can be a conventional bicycle having a basic structure. In this embodiment, the primary bicycle frame 100 of the primary bicycle body 1 comprises a cross top bar 11, a head sleeve tube 12, a bottom bar 13 and an upright seat bar 14. The saddle 15 is disposed on the top of the upright seat bar 14. An axle 23 connected with a front folk 17 and a steering handle 24 is inserted pivotally in the head sleeve tube 12, and the steering handle 24 and the front folk 17 are disposed pivotally at corresponding ends of the head sleeve tube 12. The front wheel 19 is connected pivotally to the front folk 17. The upright seat bar 14 connects a rear folk 16, and the rear wheel 18 is connected pivotally to the rear folk 16. Disposed pivotally in a common joint of the bottom bar 13 and the upright seat bar 14 are a front sprocket wheel 20 and a pedal mechanism which is used to drive the front sprocket wheel 20. In this embodiment, the pedal mechanism comprises a pair of cranks and pedals 25, 26, the cranks are connected to both sides of the center of the front sprocket wheel 20, and the pedals 25, 26 are connected to the cranks. A rear sprocket wheel 21 is disposed pivotally in hub of the rear wheel 18, and the front sprocket wheel 20 and the rear sprocket wheel 21 are linked by a chain 22 in engagement manner.

The auxiliary wheel 43 is connected pivotally to the auxiliary bicycle frame 310, and the auxiliary bicycle body 3 may not have a front folk, a rear folk, a front wheel and a rear wheel but it still has a cross top bar 31, a head sleeve tube 32, a bottom bar 33, an upright seat bar 34, a saddle 35, an active gear 371, a passive gear 372, a stem 39, a steering handle 40 and a pedal mechanism. In this embodiment, the pedal mechanism comprises a pair of cranks 411, 421 and a pair of pedals 41, 42, the cranks 411, 421 are connected to both sides of the shaft of the auxiliary wheel 43, and the pedals 41, 42 are connected to the cranks 411, 421, respectively. The steering handle 40 is connected pivotally to the head sleeve tube 32, the saddle 35 is disposed on the top of the upright seat bar 34, and the pedal mechanism of the auxiliary bicycle body drives the auxiliary wheel 43.

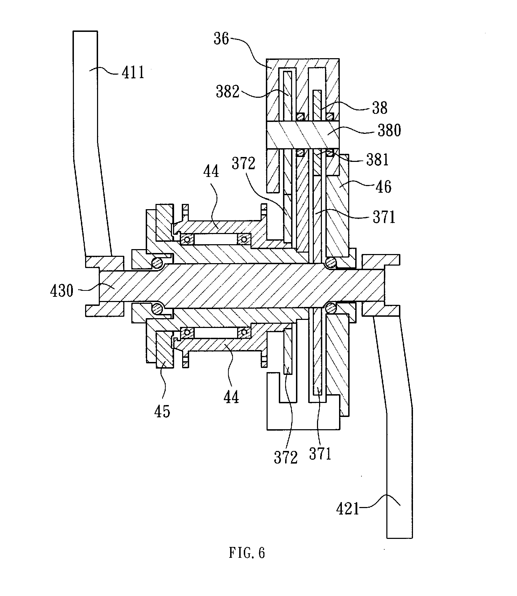

The bottom bar 33 and the upright seat bar 34 are not very long and from two ends extend to connect two side bars 331, 332 and two upright side bars 341, 342, respectively. The side bars 331, 332 and the upright side bars 341, 342 are connected two fixing base 45, 46, and the auxiliary wheel 43 having a rung 44 is disposed pivotally between the fixing base 45, 46. A shaft 430 is disposed pivotally at the center of the auxiliary wheel 43, and the fixing base 45, 46 are disposed at the corresponding ends of the shaft 430. As shown in FIGs. 1 and 6, the cranks 411, 421 connected with the pedals 41, 42 are connected to the corresponding ends of the shaft 430. Through the cranks 411, 421 the pedals 41, 42 drive the active gear 371, and the passive gear 372 is disposed above the rung 44 and moves along with the rung 44.

In this embodiment, the active gear 371 is a fixed gear, the passive gear 372 is a movable gear, and the active gear 371 and the passive gear 372 are disposed between the fixing bases 45, 46. The active gear 371 and the passive gear 372 can be covered by an idler box 36, and the idler box 36 is fixed to the bases 46. The idler box 36 further contains an idler assembly 380 which can engage with the active gear 371 and the passive gear 372. The idler assembly 380 comprises a big idler 382 and a small idler 381, and through a shaft 380 the big idler 382 and the small idler 381 move accordingly. The big idler 382 engages with the passive gear 372, and the small idler 381 engages with the active gear 371. The active gear 371 drives the small idler 381, and the big idler 382, moving accordingly, drives the passive gear 372, so that the passive gear 372 drives the rung 44 to rotate the auxiliary wheel 43.

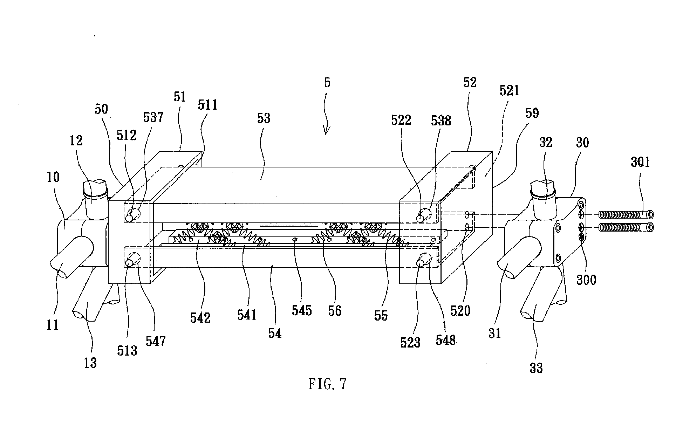

As shown in FIGs. 1 and 7, in this embodiment, the first end 50 of the articulation mechanism 5 is the extremity of a left holding base 51, and the left holding base 51 is screw-fixed to a connecting bulk 10 around the head sleeve tube 12; the second end 59 is the extremity of a right holding base 52, wherein a bolt 301 passes through fixing holes 300 of a connecting bulk 30 around the head sleeve tube 32 and into round holes 520 to fixes the right holding base 52. The holding bases 51 have a holding cavity 511 and a holding cavity 521, and the linking rods 53, 54 are disposed pivotally in corresponding holding cavities 511, 521.

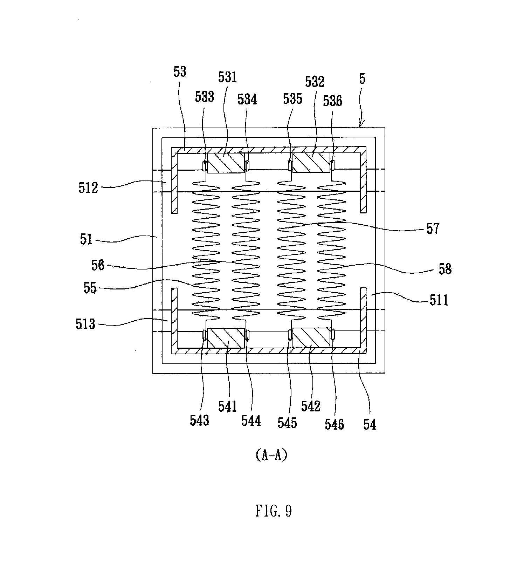

As shown in FIG. 9, the linking rods 53, 54 are U-shaped and their notches face inwardly. Each of the linking rods 53 and 54 has two pedestal portions, 531, 532 and 541, 542 respectively, and pedestal portions 531, 532 are distanced from each other, as are the pedestal portions 541, 542. Both sides of the pedestal portion 531 have a plurality of distanced fixing portions 533, 534, both sides of the pedestal portion 532 have a plurality of distanced fixing portions 535, 536, both sides of the pedestal portion 541 have a plurality of distanced fixing portions 543, 544, and both sides of the pedestal portion 542 have a plurality of distanced fixing portions 545, 546. In this embodiment, the fixing portions 533, 534, 535, 536 and fixing portions 543, 544, 545, 546 are protruding ribs, and they may be ring structures in other applications.

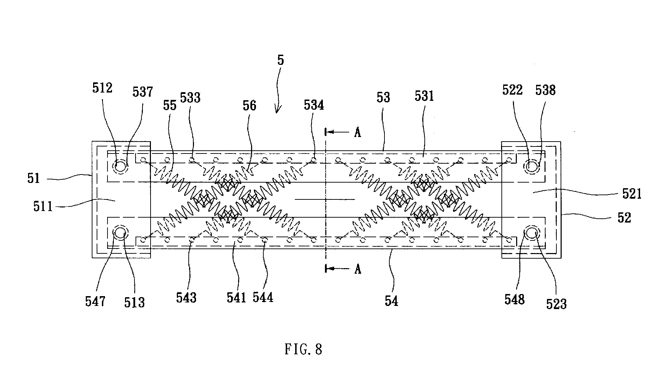

As shown in FIGs. 8 and 9, the twin-frame bicycle of the present invention further comprises a resilient tension mechanism, wherein the resilient tension mechanism has a plurality of elastic elements 55, 56, 57, 58. Two ends of each elastic element 55, 56, 57, 58 are fixed to the corresponding 533, 534, 535, 536 of the pedestal portion 531, 532 and 543, 544, 545, 546 of the pedestal portion 541, 542 and the elastic elements 55, 56, 57, 58 are crossed between the linking rods 53, 54. It is to be noted that the elastic elements 55, 56, 57, 58 may be strong springs of high elasticity coefficients and may be strong springs of different high elasticity coefficients, and different numbers of elastic elements can be selectively disposed on both sides of each of the pedestal portion 531, 532, 541, 542, to keep the saddles 15 and 35 in the same horizontal plane when the twin-frame bicycle stands still, so that forward or backward slanting will not occur. As shown in FIGs. 7 and 8, two ends of the linking rods 53, 54 have perforations 537, 538 and 547, 548, respectively, wherein the linking rods 53, 54 are pivoted to axles 512, 513 and 522, 523 and fixed to the holding bases 51, 52 respectively. The diameters of axles 512, 513 and 522, 523 are smaller than those of the perforations 537, 538 and 547, 548 and tolerance exists between them, thus allowing a little flexibility for the linking rods 53, 54.

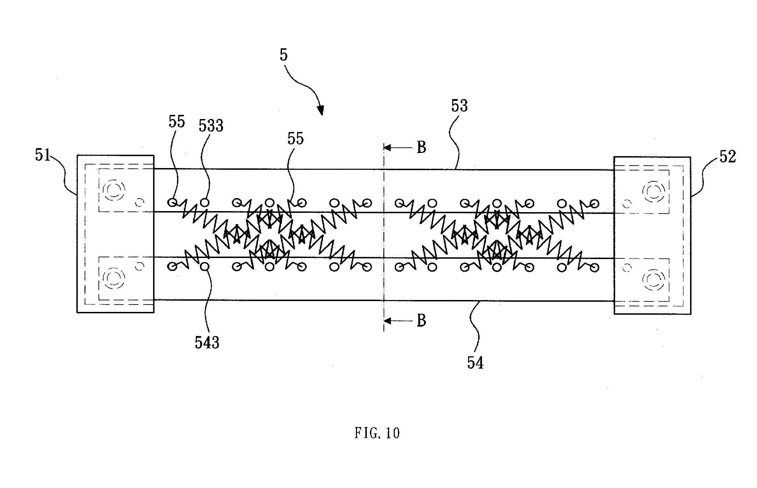

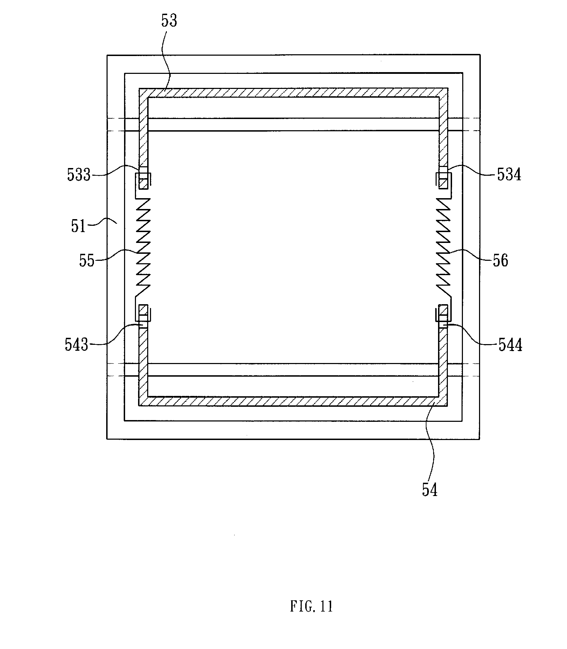

As shown in FIGs. 10 and 11, a plurality of fixing portions 533, 534 (openings) and 543, 544 can be disposed at sidewalls of the U-shaped linking rods 53, 54, wherein the ends of the elastic elements 55, 56 are hook-shaped and used to hook the fixing portions 533, 534 and 543, 544, and the elastic elements 55, 56 are crossed between the linking rods 53, 54.

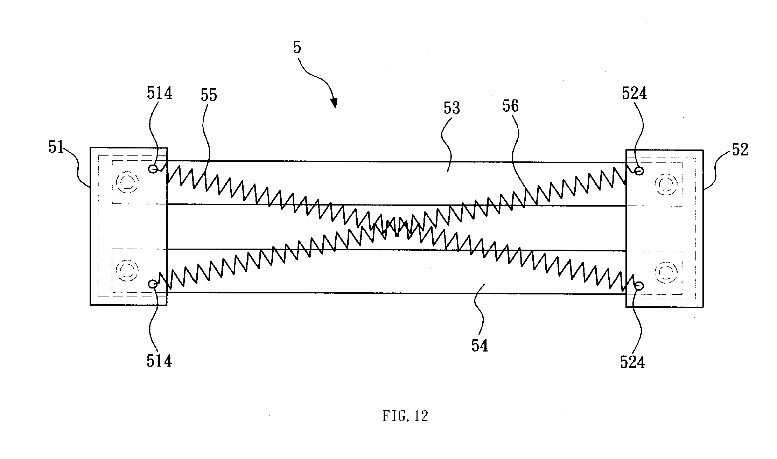

As shown in FIG. 12, in this embodiment, linking rods 53, 54 do not have fixing portions while the holding base 51, 52 have a plurality of fixing holes 514 and 524 respectively, wherein the ends of the elastic elements 55, 56 are hook-shaped and used to hook the fixing holes 514 and 524, and the elastic elements 55, 56 are crossed between the linking rods 53, 54.

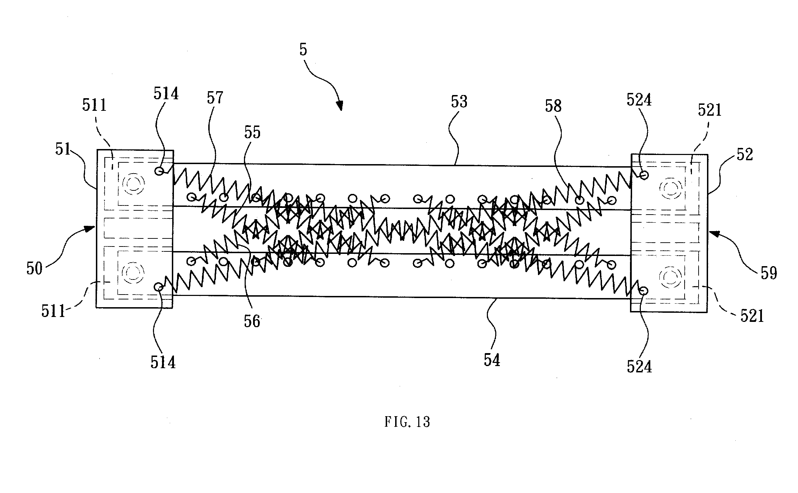

As shown in FIG. 13, in this embodiment, each of the holding base 51, 52 has two holding cavities 511 and 512, and the linking rods 53, 54 are disposed pivotally in corresponding holding cavities511, 512 and are substantially in parallel. It is to be noted that in other applications, the elastic elements 55, 56, 57, 58 are defined as a first group (elastic elements 57, 58) and a second group (elastic elements 55, 56), wherein two ends of each elastic element 57, 58 of the first group are fixed to fixing holes 514 and 524 at the first end and the second end of the articulation mechanism 5, and two ends of each elastic element 55, 56 of the second group are connected to the linking rods 53, 54.

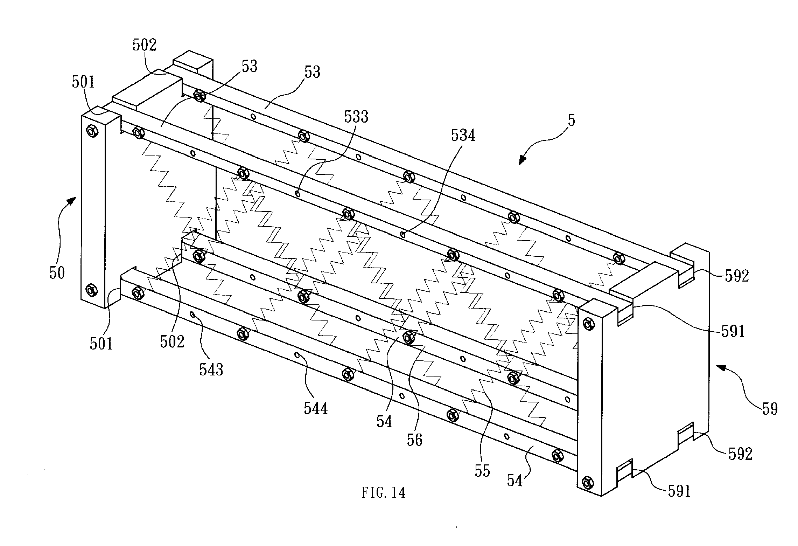

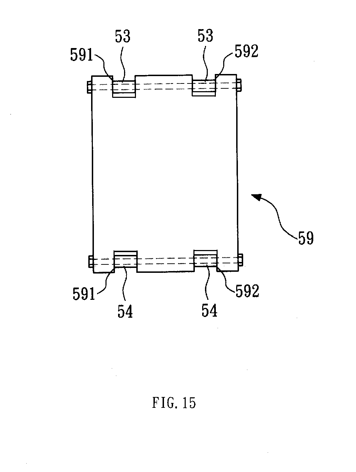

As shown in FIGs. 14 and 15, in this embodiment, the articulation mechanism 5 comprises four linking rods 53, 54, wherein two corresponding sides of the first end 50 has two slots 501, 502 and two corresponding sides of the second end 59 has two slots 591, 592. The linking rods 53, 54 are disposed pivotally in the corresponding slots 501 and 591 and in the corresponding slots 502 and 592 respectively. A plurality of fixing portions (perforation) 533, 534 are disposed on two corresponding sides of each linking rod 53, and a plurality of fixing portions (perforation) 543, 544 are disposed on two corresponding sides of each linking rod 54. The elastic elements 55, 56 are fixed (screw-fixed) to the corresponding fixing portions 533, 534 of the linking rod 53 and the corresponding fixing portions 543, 544 of the linking rod 54, and they are crossed between the linking rods 53, 54.

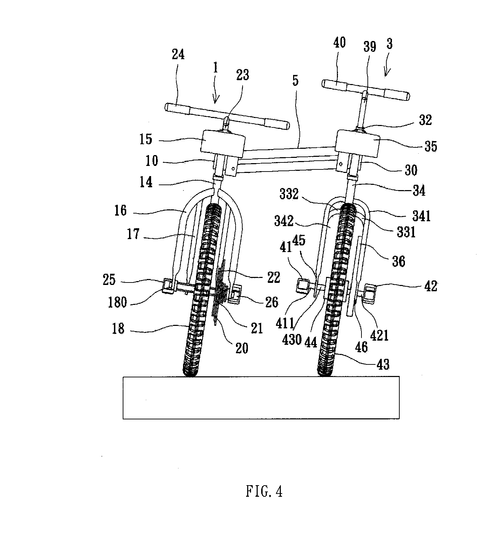

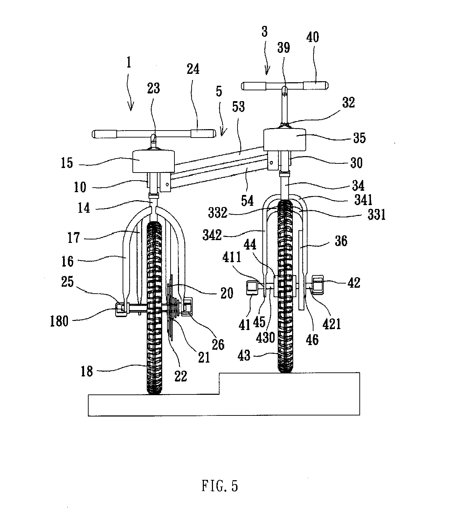

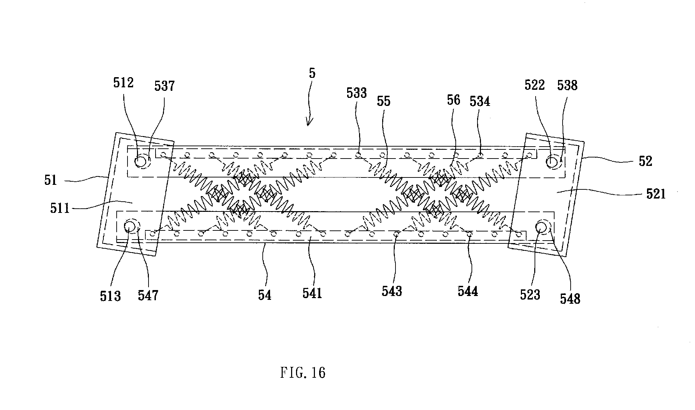

As shown in FIGs. 5, 8 and 9, when the twin-frame bicycle of the present invention moves over an uneven or bumpy road with some drops in height which make the road surface under the auxiliary bicycle body 3 higher than that under the primary bicycle body 1, the right end of the linking rods 53, 54 will slant downwards at a certain angle to offset the difference in height between the auxiliary bicycle body 3 and the primary bicycle body 1, and the tolerance between the linking rods 53, 54 and the holding bases 51, 52 will keep the auxiliary bicycle body 3 and the primary bicycle body 1 moving in parallel even under relative shift disposition or movement. In addition, the relative shift disposition or movement of the articulation mechanism 5 will make the elastic elements 56, 58 stretch and the elastic elements 55, 57 compress so that the resilient force of the stretched elastic elements 56, 58 and the compressed elastic elements 55, 57 will help keep the twin-frame bicycle in stable linkage. By the counterforce of the elastic elements 55, 56, 57, 58, both the auxiliary bicycle body 3 and the primary bicycle body 1 are kept stable and linked without inclining or tumbling. When the twin-frame bicycle of the present invention makes a right turn, the movements of the articulation mechanism 5 are as shown in FIGs. 4 and 16. When the twin-frame bicycle of the present invention makes a left turn, the movements of the articulation mechanism 5 are the inverse of those shown in FIGs. 4 and 16 and therefore not described in detail here. When the twin-frame bicycle of the present invention moves on an uneven and bumpy road with some drops in height and makes a left or right turn, the parallelogram synergy formed by the linking rods 53, 54 and the holding bases 51, 52 is just like an smoothly movable articulated joint, and the confined movement of the linking rods 53, 54 limited by the holding bases 51, 52 (holding cavities 511, 521) not only keeps both the auxiliary bicycle body 3 and the primary bicycle body 1 in automatically balanced coordination but also prevents the twin-frame bicycle of the present invention from overturning or tumbling.

The holding bases 51, 52 and the linking rods 53, 54 of the present invention can be made of rigid material (such as steel). Furthermore, to avoid strain due to exceeding stress, the contacting areas between both ends of the linking rods 53, 54 and the holding bases 51, 52 are enlarged.

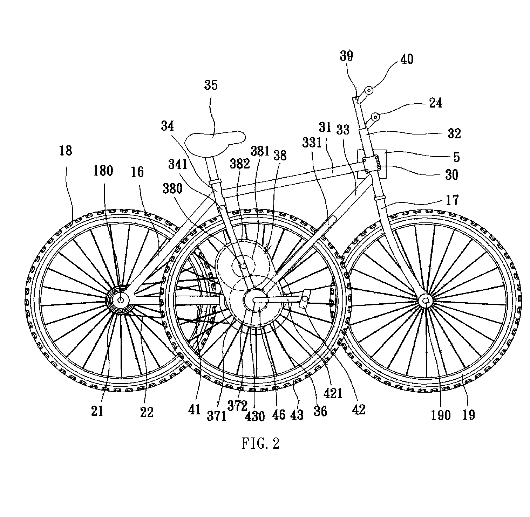

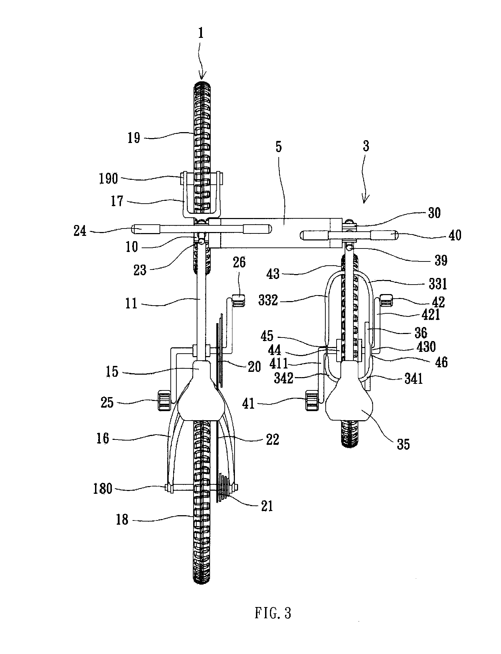

The auxiliary bicycle body 3 is arranged in parallel to the primary bicycle body 1 and, the shaft 430 of the auxiliary wheel 43 is disposed between the shaft 190 of the front wheel 19 and shaft 180 of the rear wheel 18, i.e., the auxiliary wheel 43 is disposed between the front wheel 19 and the rear wheel 18, as shown in FIGs. 2 and 3.

According to the present invention, the front wheel 19, the rear wheel 18 and the auxiliary wheel 43 form a triangular base for the twin-frame bicycle and the riders' center of gravity is within the triangular base, which keeps the riders stable without any possibility of tumbling.

The steering handle 24 of the primary bicycle body 1 and the steering handle 40 of the auxiliary bicycle body 3 are adjustable, and this is a known technique and not described in detail here. Since the twin-frame bicycle of the present invention comprises the front wheel 19, the rear wheel 18 and the auxiliary wheel 43, a brake line of the primary bicycle body 1 may be connected to the auxiliary wheel 43 to brake the auxiliary wheel 43, and this is a known technique and not described in detail or shown in the figures here. For safety purpose, a brake handle 101 can control the brake line connected to both the rear wheel 18 of the primary bicycle body 1 and the auxiliary wheel 43 of the auxiliary bicycle body 3 to brake the twin-frame bicycle. Since the auxiliary bicycle body 3 does not comprise a front wheel and a rear wheel, a brake handle 102 of the primary bicycle body 1 is used only to brake the front wheel 19.

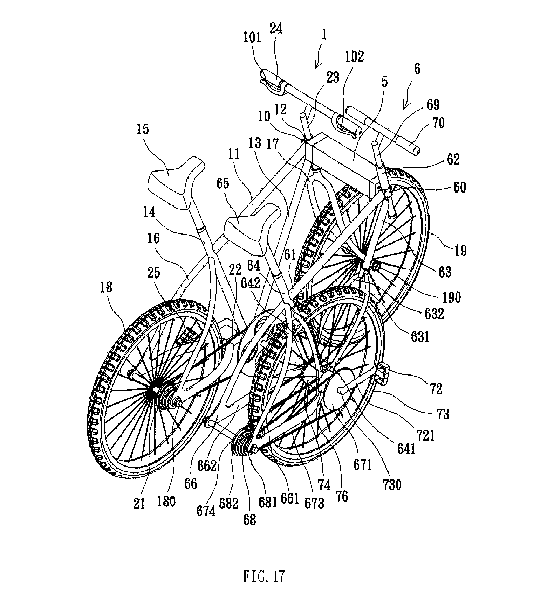

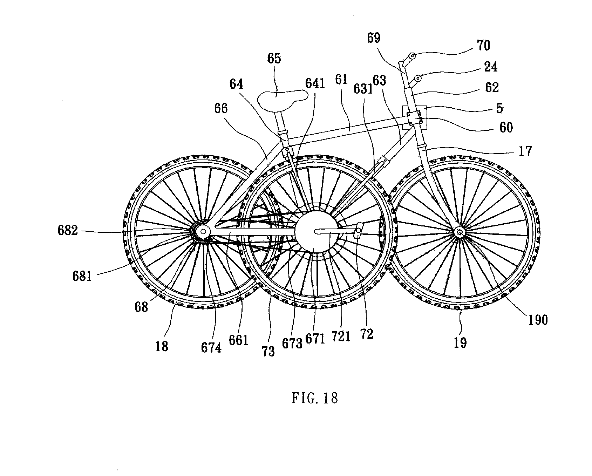

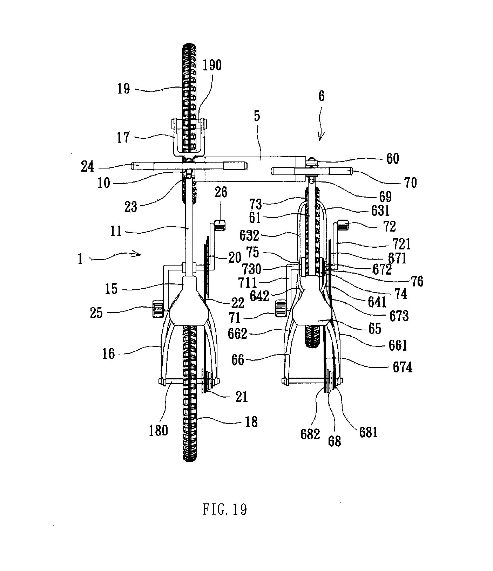

Another embodiment of an auxiliary bicycle body 6 is shown in FIGs. 17 to 20. Like the above-mentioned auxiliary bicycle body 3, the auxiliary bicycle body 6 may not comprise a front folk, a front wheel and a rear wheel but comprises a cross top bar 61, a head sleeve tube 62, a bottom bar 63, an upright seat bar 64, a saddle 65, a rear folk 66, a big sprocket wheel 671, a small sprocket wheel 672, an axle 69, a steering handle 70 and a pair of pedals 71, 72. The auxiliary wheel 73 and an auxiliary sprocket wheel are connected pivotally to the auxiliary bicycle body 6. In this embodiment, the auxiliary bicycle body 6 further comprises two side bars 631, 632 and two upright bars 641, 642. The big sprocket wheel 671 and the auxiliary wheel 73 are connected pivotally to the auxiliary bicycle body 6, and the big sprocket wheel 671 can be regarded as the auxiliary sprocket wheel.

Compared to the above-mentioned auxiliary bicycle body 3, the auxiliary bicycle body 6 further comprises the rear folk 66, and two side supporting bar 661, 662 are disposed at lower portion of the rear folk 66. The bottom bar 63 and the upright seat bar 64 are not very long and from two ends extend to connect two side bars 631, 632 and two upright side bars 641, 642, respectively. The side bars 631, 632, the upright side bars 641, 642 and the side supporting bar 661, 662 are connected two fixing base 75, 76, and the auxiliary wheel 73 having a rung 74 is disposed pivotally between the fixing base 75, 76. In addition, a shaft 730 is disposed pivotally at the center of the auxiliary wheel 73.

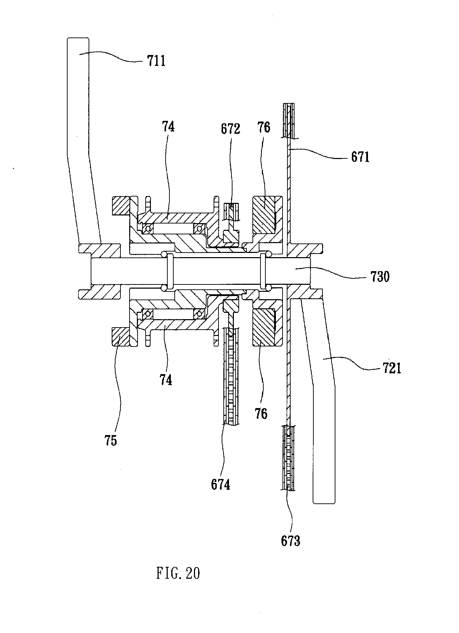

As shown in FIGs. 17 and 20, two cranks 711, 721 connected with the pedals 71, 72 are connected to the corresponding ends of the shaft 730. Through the cranks 711, 721 the pedals 71, 72 drive the big sprocket wheel 671, and the small sprocket wheel 672 is disposed above the rung 74 and moves along with the rung 74. One end of the rear folk 66 is connected to the upright seat bar 64, and a speed-changing sprocket wheel assembly 68 is disposed at the other end of the rear folk 66. The speed-changing sprocket wheel assembly 68 is connected to the side supporting bar 661 which is on the same side as the big sprocket wheel 671, and the speed-changing sprocket wheel assembly 68 and the big sprocket wheel 671 are disposed at two ends of the side supporting bar 661. Two sprocket wheels 681, 682 of the speed-changing sprocket wheel assembly 68 engage with the big sprocket wheel 671 and the small sprocket wheel 672 through two chains 673, 674. The pedals 71, 72 of the auxiliary bicycle body 3 drive the big sprocket wheel 671, through one chain 673 the big sprocket wheel 671 drives the sprocket wheel 681, and through another chain 674 of the speed-changing sprocket wheel assembly 68 the sprocket wheel 682 drives the small sprocket wheel 672; as the big sprocket wheel 671, the rung 74 and the auxiliary wheel 73 are connected pivotally to the auxiliary bicycle body 6 and move accordingly, the riders on the saddles 15, 65 only need to pedal the pedals 71, 72, and the twin-frame bicycle will move forward.

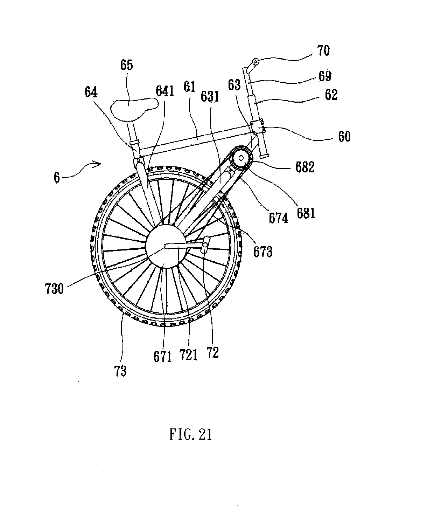

Another embodiment of an auxiliary bicycle body 6 is shown in FIG. 21. In this embodiment, the rear folk 66 is no longer needed and the speed-changing sprocket wheel assembly 68 is connected pivotally to the bottom bar 63. Similarly, the riders only need to pedal the pedals 71, 72 to drive the twin-frame bicycle to move forward; meanwhile, production materials and cost are saved.

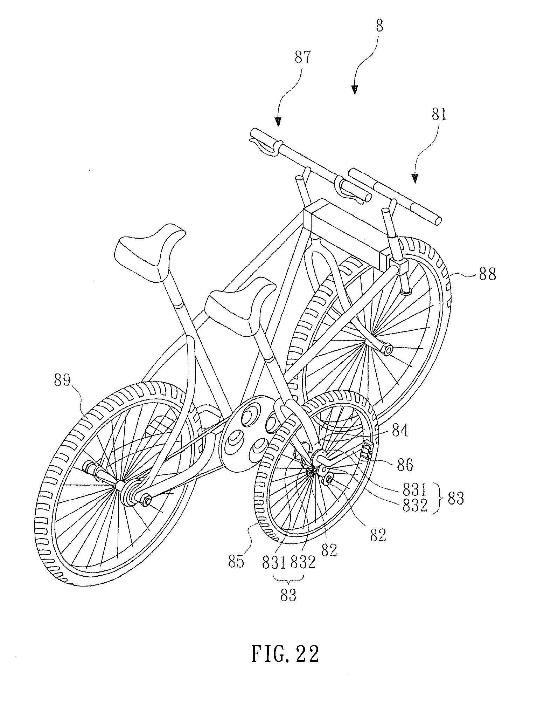

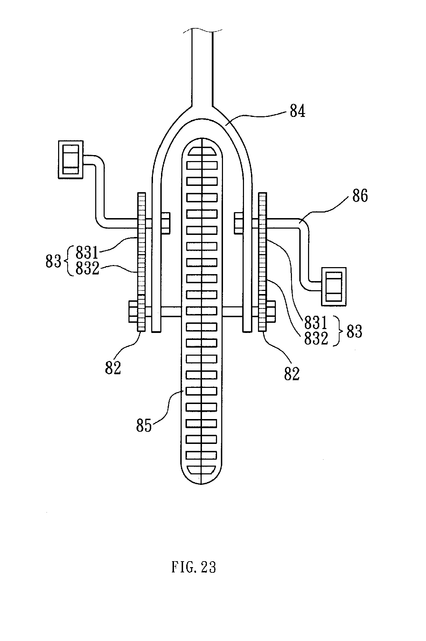

FIG. 22 is a schematic view of a further embodiment of a twin-frame bicycle of the present invention. FIG. 23 is a schematic view of a gear assembly disposed at a rear folk of the auxiliary bicycle body according to FIG. 22 of the present invention. As shown in FIGs. 22 and 23, in this embodiment, an auxiliary bicycle body 81 of the twin-frame bicycle 8 comprises two auxiliary sprocket wheels 82, a gear assembly 83, an auxiliary rear folk 84, an auxiliary wheel 85 and a pedal mechanism 86, wherein the diameter of the auxiliary wheel 85 is smaller than that of a front wheel 88 and a rear wheel 89 of the primary bicycle body 87, and the gear assembly 83 comprises two active gears 831 and two passive gears 832. The auxiliary sprocket wheels 82 are connected pivotally to both sides of a shaft of the auxiliary wheel 85. The active gears 831 are connected pivotally to the auxiliary rear folk 84 on both sides of the auxiliary whee185. Each passive gear 832 is disposed between the corresponding active gear 831 and auxiliary sprocket wheel 82. The pedal mechanism 86 of the auxiliary bicycle body 81 drives the active gears 831 to drive the auxiliary sprocket wheels 82 through the passive gears 832, and the auxiliary wheel 85 is driven to rotate. The gear assembly 83 is preferably disposed corresponding above the shaft of the auxiliary wheel 85, and the ration of the diameters of the active gear 831 and the auxiliary sprocket wheels 82 is 3:1. In addition, in other applications, the gear assembly 83 can be covered in a housing, and the housing can provide protection for the gear assembly 83.

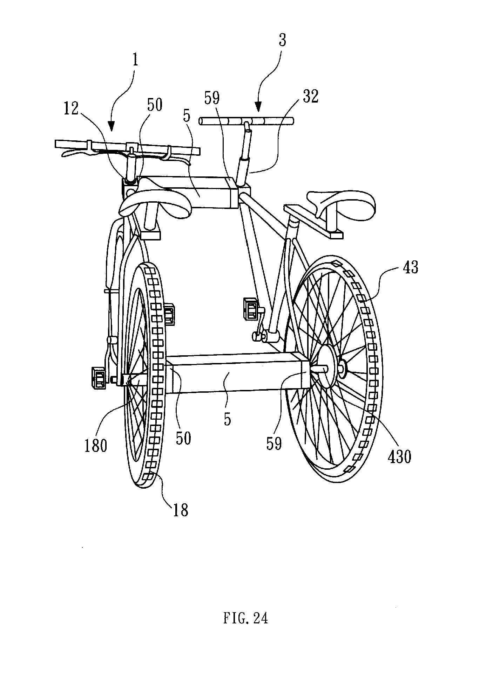

As shown in FIGs. 7 and 24, it is to be noted that each of twin-frame bicycles according to the above-mentioned embodiments can comprise two articulation mechanisms 5, wherein the first end 50 and the second end 59 of one of the articulation mechanisms 5 are connected to the head sleeve tube 12 of the primary bicycle body 1 (the primary bicycle frame) and the head sleeve tube 32 of the auxiliary bicycle body 3 (the auxiliary bicycle frame), and the first end 50 and the second end 59 of the other articulation mechanism 5 are connected respectively to the shaft 180 of the rear wheel 18 and the shaft 430 of the auxiliary wheel 43, and thus the shaft 430 of the auxiliary wheel 43 is disposed substantially along an extension line of the shaft 180 of the rear wheel 18.

In sum, a primary bicycle body (such as a conventional bicycle body) can be linked with an auxiliary bicycle body to form a twin-frame bicycle of the present invention, for two riders to ride side by side in parallel and pedal individually. Besides providing fun riding, the articulation mechanism linking the primary bicycle body and the auxiliary bicycle body makes the twin-frame bicycle stable and unlikely to tumble or overturn. Furthermore, since the structure of the auxiliary bicycle body is simple, the cost is saved and the maintenance of the twin-frame bicycle is easy.

In addition, since the auxiliary wheel is disposed between the front wheel and the rear wheel of the primary bicycle body, the center of gravity of the twin-frame bicycle will not be located at the rear, so the saddles need not be disposed much toward the back. Moreover, the primary bicycle body and the auxiliary bicycle body need only one articulation mechanism to link them, and the structure of the twin-frame bicycle of the present invention can be further simplified, thus further saving production cost.

### WHILE THE EMBODIMENTS OF THE PRESENT INVENTION HAVE BEEN ILLUSTRATED AND DESCRIBED, VARIOUS MODIFICATIONS AND IMPROVEMENTS CAN BE MADE BY THOSE SKILLED IN THE ART. THE

EMBODIMENTS OF THE PRESENT INVENTION ARE THEREFORE DESCRIBED IN AN ILLUSTRATIVE BUT NOT RESTRICTIVE SENSE. IT IS INTENDED THAT THE PRESENT INVENTION IS NOT LIMITED TO THE PARTICULAR FORMS AS ILLUSTRATED, AND THAT ALL MODIFICATIONS THAT MAINTAIN THE SPIRIT AND SCOPE OF THE PRESENT INVENTION ARE WITHIN THE SCOPE DEFINED IN THE APPENDED CLAIMS.

## Claims

1. A twin-frame bicycle, comprising:
a primary bicycle body, having a primary bicycle frame, a front wheel, a rear wheel and a pedal mechanism, wherein the front wheel and the rear wheel are connected pivotally to the primary bicycle frame and distanced from each other, and the pedal mechanism is used to drive the front wheel or the rear wheel;
an auxiliary bicycle body, having an auxiliary bicycle frame and an auxiliary wheel, wherein the auxiliary wheel is connected pivotally to the auxiliary bicycle frame; and
at least one articulation mechanism, having a first end, a second end and at least two linking rods, wherein the first end and the second end are connected to the primary bicycle frame and the auxiliary bicycle frame, respectively, the linking rods are substantially disposed in parallel between the first end and the second end, and the first end, the second end and the linking rods forming a movable quadrangle.

2. The twin-frame bicycle according to Claim 1, wherein the primary bicycle body further comprises a front sprocket wheel, a rear sprocket wheel and a chain, the front sprocket wheel is connected pivotally to the primary bicycle frame, the rear sprocket wheel and the rear wheel are distanced from the front sprocket wheel and connected pivotally to the primary bicycle frame, the chain links the front sprocket wheel and rear sprocket wheel in engagement manner, and the pedal mechanism drives the front sprocket wheel rotating to drive the rear sprocket wheel through the chain and rotate the rear wheel.

3. The twin-frame bicycle according to Claim 2, wherein the primary bicycle frame further comprises a steering handle, a head sleeve tube, a front folk, a rear folk, an upright seat bar and a saddle, the steering handle and the front folk are connected pivotally to the two corresponding sides of the head sleeve tube, the front wheel is connected pivotally to the front folk, the rear wheel is connected pivotally to the rear folk, and the saddle is disposed on the top of the upright seat bar.

4. The twin-frame bicycle according to Claim 3, wherein the pedal mechanism further comprises two cranks and two pedals, the cranks are connected to both sides of the center of the front sprocket wheel, and the pedals are connected to the cranks.

5. The twin-frame bicycle according to Claim 1, wherein the auxiliary bicycle body further comprises a steering handle, a head sleeve tube, an upright seat bar, a saddle and a pedal mechanism, the steering handle is connected pivotally to the head sleeve tube, the saddle is disposed on the top of the upright seat bar, and the pedal mechanism of the auxiliary bicycle body drives the auxiliary wheel.

6. The twin-frame bicycle according to Claim 5, wherein a shaft of the auxiliary wheel is disposed between those of the front wheel and the rear wheel.

7. The twin-frame bicycle according to Claim 5, wherein a shaft of the auxiliary wheel is disposed substantially along an extension line of a shaft of the rear wheel.

8. The twin-frame bicycle according to Claim 7, wherein the twin-frame bicycle comprises two articulation mechanisms, the first end and the second end of one of the articulation mechanisms are connected to the primary bicycle frame and the auxiliary bicycle frame respectively, and the first end and the second end of the other articulation mechanism are connected respectively to the shafts of the rear wheel and the auxiliary wheel.

9. The twin-frame bicycle according to Claim 5, wherein the auxiliary bicycle body further comprises an auxiliary sprocket wheel, the auxiliary sprocket wheel is connected pivotally to the shaft of the auxiliary wheel, and the pedal mechanism of the auxiliary bicycle body drives the auxiliary sprocket wheel to rotate the auxiliary wheel.

10. The twin-frame bicycle according to Claim 5, wherein the pedal mechanism of the auxiliary bicycle body further comprises two cranks and two pedals, the cranks are connected to both sides of a shaft of the auxiliary wheel, and the pedals are connected to the cranks.

11. The twin-frame bicycle according to Claim 9, wherein the auxiliary bicycle body further comprises two fixing bases, an active gear, a passive gear and an idler box, the auxiliary wheel further comprises a rung, the fixing bases are connected to both sides of the shaft of the auxiliary wheel, the active gear is a fixed gear, the passive gear is a movable gear, the active gear and the passive gear are disposed between the fixing bases, the idler box is connected to one of the fixing bases and covers the active gear and the passive gear, the shaft of the auxiliary wheel pivots the active gear and the passive gear in the idler box and make the active gear and the passive gear engaging with an idler assembly, a small idler of the idler assembly engages with the active gear, a big idler of the idler assembly engages with the passive gear, the big idler drives the passive gear, and the passive gear drives the rung to rotate the auxiliary wheel.

12. The twin-frame bicycle according to Claim 9, wherein the auxiliary bicycle body further comprises a speed-changing sprocket wheel assembly and two chains, the auxiliary bicycle frame further comprises two side bars, two upright bars and an auxiliary rear folk, the auxiliary wheel further comprises a rung, the rung is connected to both sides of the shaft of the auxiliary wheel, the side bars and the upright bars are connected pivotally to the shaft of the auxiliary wheel, one end of the auxiliary rear folk is connected to each upright bar, the speed-changing sprocket wheel assembly is disposed at the other end of the auxiliary rear folk, the pedal mechanism of the auxiliary bicycle body drives the auxiliary sprocket wheel to further drive the speed-changing sprocket wheel assembly through one of the chains, and the auxiliary wheel is driven to rotate through the other chain.

13. The twin-frame bicycle according to Claim 12, wherein the auxiliary bicycle body further comprises two fixing bases and two side supporting bars, the fixing bases are connected to both sides of the shaft of the auxiliary wheel, two ends of the side supporting bars are connected to the corresponding fixing bases and the auxiliary rear folk, the speed-changing sprocket wheel assembly is connected to the side supporting bar which is on the same side as the auxiliary sprocket wheel, and the speed-changing sprocket wheel assembly and the auxiliary sprocket wheel are disposed at two ends of the side supporting bar.

14. The twin-frame bicycle according to Claim 9, wherein the auxiliary bicycle body further comprises a speed-changing sprocket wheel assembly and two chains, the auxiliary bicycle frame further comprises an bottom bar and two side bars, the auxiliary wheel further comprises a rung, the rung is connected to both sides of the shaft of the auxiliary wheel, the bottom bar is connected to the head sleeve tube, the side bars are connected pivotally to the shaft of the auxiliary wheel, the speed-changing sprocket wheel assembly is connected to the bottom bar, the pedal mechanism of the auxiliary bicycle body drives the auxiliary sprocket wheel to further drive the speed-changing sprocket wheel assembly through one of the chains, and the auxiliary wheel is driven to rotate through the other chain.

15. The twin-frame bicycle according to Claim 5, wherein the auxiliary bicycle body further comprises two auxiliary sprocket wheels, a gear assembly and an auxiliary rear folk, the gear assembly comprises two active gears and two passive gears, the auxiliary sprocket wheels are connected pivotally to both sides of the shaft of the auxiliary wheel, the active gears are connected pivotally to the auxiliary rear folk on both sides of the auxiliary wheel, each passive gear is disposed between the corresponding active gear and auxiliary sprocket wheel, the pedal mechanism of the auxiliary bicycle body drives the active gears to drive the auxiliary sprocket wheels through the passive gears, and the auxiliary wheel is driven to rotate.

16. The twin-frame bicycle according to Claim 1, wherein the primary bicycle body and the auxiliary bicycle body are linked and juxtaposed in parallel.

17. The twin-frame bicycle according to Claim 1, wherein the center of gravity of the twin-frame bicycle is within the triangular region defined by the front wheel, the rear wheel and the auxiliary wheel.

18. The twin-frame bicycle according to Claim 1, wherein each of the first end and the second end has at least one holding base.

19. The twin-frame bicycle according to Claim 18, wherein each holding base has a holding cavity, and the linking rods are disposed pivotally in an upper portion and a lower portion of the holding cavities and are substantially in parallel.

20. The twin-frame bicycle according to Claim 18, wherein each holding base has two holding cavities, and the linking rods are disposed pivotally in corresponding holding cavities and are substantially in parallel.

21. The twin-frame bicycle according to Claim 1, further comprising a resilient tension mechanism, wherein the resilient tension mechanism has a plurality of elastic elements, each holding base has a plurality of fixing holes, and the elastic elements hook the fixing holes and are crossed between the linking rods.

22. The twin-frame bicycle according to Claim 1, wherein the linking rods are U-shaped.

23. The twin-frame bicycle according to Claim 1, further comprising a resilient tension mechanism, wherein the resilient tension mechanism has a plurality of elastic elements, the elastic elements are defined as a first group and a second group, two ends of each elastic element of the first group are connected to the first end and the second end of the articulation mechanism, and two ends of each elastic element of the second group are connected to the linking rods.

24. The twin-frame bicycle according to Claim 1, further comprising a resilient tension mechanism, wherein the resilient tension mechanism has a plurality of elastic elements, and two ends of each elastic element are connected to the first end and the second end of the articulation mechanism.

25. The twin-frame bicycle according to Claim 1, further comprising a resilient tension mechanism, wherein the resilient tension mechanism has a plurality of elastic elements, and two ends of each elastic element are connected to the linking rods.

26. The twin-frame bicycle according to Claim 25, wherein the each linking rod has at least one pedestal portion, the pedestal portions are disposed on corresponding surfaces of linking rods, a plurality of fixing portions are disposed on two corresponding sides of each pedestal portion, and the elastic elements are fixed to the corresponding fixing portions and crossed between the linking rods.

27. The twin-frame bicycle according to Claim 25, wherein each linking rod has two pedestal portions distanced from each other, a plurality of fixing portions are disposed on two corresponding sides of each pedestal portion, and the elastic elements are fixed to the corresponding fixing portions and crossed between the linking rods.

28. The twin-frame bicycle according to Claim 25, wherein the elastic elements are strong springs of high elasticity coefficients.

29. The twin-frame bicycle according to Claim 28, wherein the elastic elements are strong springs of different high elasticity coefficients.

30. The twin-frame bicycle according to Claim 25, wherein the articulation mechanism comprises four linking rods, two corresponding sides of the first end and two corresponding sides of the second end have two slots, each linking rod is disposed pivotally in the corresponding slots of the first end and the second end, a plurality of fixing portions are disposed on two corresponding sides of each linking rod, and the elastic elements are fixed to the corresponding fixing portions and crossed between the linking rods.
